# FASCICULE DE BREVET EUROPEEN

(11) **EP 2 301 093 B1**
(45) Date de publication et mention de la délivrance du brevet: **08.02.2012**
(21) Numéro de dépôt: 09793959.9
(22) Date de dépôt: 09.07.2009
(51) Int. Cl.: H01M 10/0567, H01M 10/0569, H01M 10/0525, H01M 10/0568, H01B 1/12, H01G 9/038

(54) **ÉLECTROLYTES LIQUIDES IONIQUES COMPRENANT UN SURFACTANT ANIONIQUE ET DISPOSITIFS ÉLECTROCHIMIQUES TELS QUE DES ACCUMULATEURS LES COMPRENANT.**
FLÜSSIGE ELEKTROLYTE MIT EINEM FLÜSSIGEN TENSID UND ELEKTROCHEMISCHE VORRICHTUNGEN, Z.B. SPEICHERBATTERIEN, DAMIT
IONIC LIQUID ELECTROLYTES THAT INCLUDE AN ANIONIC SURFACTANT AND ELECTROCHEMICAL DEVICES SUCH AS STORAGE BATTERIES COMPRISING THEM

(30) Priorité: 11.07.2008 FR 0854743
(43) Date de publication de la demande: 30.03.2011
(73) Titulaire: COMMISSARIAT A L'ENERGIE ATOMIQUE ET AUX ENERGIES ALTERNATIVES, 75015 Paris (FR); Centre National de la Recherche Scientifique, 75016 Paris (FR)
(72) Inventeur: GIROUD, Nelly, F-38100 Grenoble (FR); CHAINET, Eric, F-38190 Froges (FR); ROUAULT, Hélène, F-38420 Le Versoud (FR)
(74) Mandataire: Ilgart, Jean-Christophe
(86) Numéro de dépôt international: PCT/EP2009/058775
(87) Numéro de publication internationale: WO 2010/004012

(56) Documents cités:
- JP-A- 2006 339 009
- JP-A- 2006 339 010
- US-A- 5 869 070
- US-A1- 2007 026 318
- TANG J; LI D; SUN C; ZHENG L; LI J: "Temperature dependant self-assembly of surfactant Brij 76 in room temperature ionic liquid" COLLOIDS AND SURFACES. A, PHYSICACHEMICAL AND ENGINEERING ASPECTS, ELSEVIER, AMSTERDAM, NL, vol. 273, no. 1-3, 1 février 2006 (2006-02-01), pages 24-28, XP025136380 ISSN: 0927-7757 [extrait le 2006-02-01]

## Description

### DOMAINE TECHNIQUE

L'invention concerne un électrolyte liquide, plus particulièrement un électrolyte comprenant un solvant liquide ionique et un sel conducteur, et en outre un surfactant anionique.

L'électrolyte liquide selon l'invention peut ainsi être appelé électrolyte liquide ionique.

L'invention a plus particulièrement trait à un électrolyte pour accumulateurs rechargeables au lithium comprenant un solvant liquide ionique et un sel de lithium.

L'invention concerne, en outre, un dispositif ou système électrochimique tel qu'un accumulateur rechargeable, notamment un accumulateur au lithium primaire ou un accumulateur lithium ion, comprenant cet électrolyte.

L'invention peut notamment trouver son application dans le domaine du stockage électrochimique, des accumulateurs et, en particulier, des accumulateurs au lithium.

### ÉTAT DE LA TECHNIQUE ANTÉRIEURE

De manière générale, le domaine technique de l'invention peut être défini comme celui de la formulation des électrolytes, et plus précisément comme celui de la formulation des électrolytes liquides ioniques, c'est-à-dire des solutions comprenant un solvant liquide ionique et un soluté tel qu'un sel conducteur, où des mécanismes de conduction ionique sont mis en jeu.

Si l'on s'intéresse plus particulièrement aux accumulateurs au lithium, un accumulateur au lithium est généralement constitué par :
- deux électrodes, à savoir une électrode positive et une électrode négative. L'électrode positive comprend généralement, en tant que matière électrochimiquement active, des matériaux d'intercalation du lithium tels que des oxydes lamellaires de métaux de transition lithiés, des olivines (LiFePO₄) ou des spinelles (par exemple le spinelle LiNi_{0.5}Mn₁,₅O₄). L'électrode négative comprend généralement, en tant que matière électrochimiquement active, du lithium métal dans le cas des accumulateurs primaires, ou des matériaux d'intercalation tels que le carbone graphite (C_{gr}), ou de l'oxyde de titane lithié (Li₄Ti₅O₁₂) dans le cas des accumulateurs basés sur la technologie lithium-ion,
- des collecteurs de courant, généralement en cuivre pour l'électrode négative, ou en aluminium pour l'électrode positive, qui permettent la circulation des électrons, et donc la conduction électronique, dans le circuit extérieur,
- un électrolyte où se produit la conduction ionique qui assure le passage des ions lithium d'une électrode à l'autre,
- un séparateur permettant d'empêcher le contact entre les électrodes et donc les court-circuits. Ces séparateurs peuvent être des membranes polymères microporeuses.

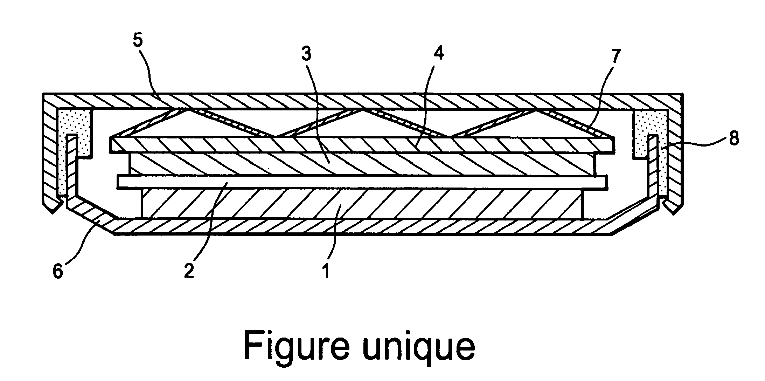

L'accumulateur peut avoir notamment la forme d'une pile bouton telle décrite sur la figure 1.

Les électrolytes employés dans les accumulateurs lithium ou lithium ion actuels sont des électrolytes liquides constitués d'un mélange de solvants organiques, le plus souvent des carbonates, dans lequel est dissout un sel de lithium.

Les solvants organiques les plus courants sont ainsi des carbonates cycliques ou non, tels que le carbonate d'éthylène (CE), le carbonate de propylène (CP), le carbonate de diméthyle (CDM), le carbonate de diéthyle (CDE), et le carbonate de vinylène (CV). Bien que permettant un très bon rendement, ces électrolytes organiques posent des problèmes de sécurité. En effet, ils sont inflammables et volatiles, ce qui peut générer des feux et des explosions dans certains cas. En outre ces électrolytes ne peuvent être utilisés à des températures supérieures à 60°C car, du fait de leur volatilité, ils peuvent provoquer le gonflement de l'accumulateur au lithium et conduire à une explosion de celui-ci.

Les sels de lithium ajoutés aux électrolytes sont le plus souvent choisis parmi les sels suivants :
o LiPF₆ : hexafluorophosphate de lithium,
o LiBF₄ : tétrafluoroborate de lithium,
o LiAsF₆ : hexafluoroarsenate de lithium,
o LiClO_{4:} perchlorate de lithium,
o LiBOB : bis oxalatoborate de lithium,
o LiTFSI : bis (trifluorométhylsulfonyl) imide de lithium,
o LiBeti : bis (perfluoroéthylsulfonyl) imide de lithium,
o LiFSI : bis (fluorosulfonyl) imidure de lithium,
o ou les sels de formule générale Li [N (SO₂CₙF₂ₙ₊₁) (SO₂CₘF₂ₘ₊₁)], où n et m identiques ou différents sont des entiers naturels compris entre 1 et 10, préférentiellement entre 1 et 5.

Afin de surmonter les problèmes de sécurité et notamment d'inflammation, et d'accumulation de gaz dus à la faible stabilité thermique, à la pression de vapeur élevée et au faible point éclair des solvants organiques de ces électrolytes liquides, il a été proposé de les remplacer par des liquides ioniques.

On peut définir les liquides ioniques comme des sels liquides comprenant un cation et un anion. Les liquides ioniques sont ainsi généralement composés d'un cation organique volumineux, leur donnant une charge positive, auquel est associé un anion inorganique qui leur donne une charge négative. En outre, les liquides ioniques sont, comme leur nom l'indique, généralement liquides dans l'intervalle de température 0°C à 200°C, notamment autour de la température ambiante, et ils sont ainsi souvent dénommés « RTIL » (ou « Room Temperature Ionic Liquids » en langue anglaise).

La diversité des liquides ioniques est telle qu'il est possible de mettre au point un grand nombre d'électrolytes. Toutefois, il existe des familles de liquides ioniques plus intéressantes. Ces familles sont classées selon le type de cation utilisé. On peut citer notamment les cations suivants :
o cation imidazolium di ou tri substitué,
o ammonium quaternaire,
o dialkyle pipéridinium,
o dialkyle pyrrolidinium,
o dialkyle pyrazolium,
o alkyle pyridinium,
o tétra-alkyle phosphonium,
o trialkyle sulfonium.

Les anions associés le plus souvent sont des anions ayant une charge délocalisée, tels que BF₄⁻, B(CN)₄⁻, CH₃BF₃⁻, CH₂CHBF₃⁻, CF₃BF₃⁻, m-CₙF₂ₙ₊₁BF₃⁻, PF₆⁻, CF₃CO₂⁻, CF₃SO₃⁻, N(SO₂CF₃)₂⁻_{,} N(COCF₃) (SOCF₃)⁻, N(CN)₂⁻, C(CN)₃⁻, SCN⁻, SeCN⁻, CuCl₂⁻, AlCl₄⁻ etc.

L'électrolyte liquide ionique est alors composé d'un liquide ionique jouant le rôle de solvant et d'un sel conducteur tel qu'un sel de lithium.

Les électrolytes liquides ioniques sont intéressants du point de vue de la sécurité dans toutes sortes d'applications électrochimiques, car ils affichent une grande stabilité thermique -pouvant aller par exemple jusqu'à 450°C pour les mélanges de 1-butyl-3-méthylimidazolium tétrafluoroborate, BMIBF₄, et de LiBF₄- ils ont une large plage de phase liquide, ils ne sont pas inflammables, et ils ont une tension de vapeur très faible.

Le document [1] décrit des électrolytes comprenant du tétrafluoroborate de 1-éthyl-3-méthylimidazolium qui est un liquide ionique à température ambiante, et du ferrocène, du tétrathiafulvalène ou du LiBF₄.

Il est possible de combiner dans l'électrolyte, un solvant organique liquide classique et un liquide ionique comme le décrit le document [2], qui a trait à un électrolyte pour accumulateur au lithium-ion qui comprend un mélange de tétrafluoroborate de 1-butyl-3-méthylimidazolium qui est un liquide ionique à température ambiante, de gamma-butyrolactone, et de tétrafluoroborate de lithium.

Le document [3] mentionne l'utilisation d'électrolytes à base de tétrafluoroborate de 1-butyl-3-méthylimidazolium (BMIBF4) et de tétrafluoroborate de 1-éthyl-3-méthylimidazolium (EMIBF4) dans des accumulateurs au lithium-ion à électrodes spinelle.

Toutefois, il se produit au sein des électrolytes comprenant un mélange de liquides ioniques et de sels conducteurs tels que des sels de lithium, des phénomènes complexes qui sont à l'origine d'un certain nombre de problèmes et d'inconvénients.

Ainsi, lorsque la concentration en sel de lithium augmente, ceci s'accompagne d'une baisse de la conductivité ionique et d'une augmentation de la viscosité. De plus les coefficients de diffusion du lithium dans ces mélanges diminuent pour une teneur en sel de lithium croissante. En fait il se produit une structuration du mélange qui diminue la mobilité des ions lithium

Le coefficient de diffusion du lithium dans ces électrolytes est inférieur à celui du cation composant le liquide ionique. Il existe donc une compétition entre les cations lithium et les cations du liquide ionique. Les cations du liquide ionique arrivent plus rapidement à la surface de l'électrode chargée négativement, et bloquent l'accès de la surface aux ions lithium qui ne peuvent pas s'intercaler dans le matériau d'intercalation de l'électrode. La réaction électrochimique ne peut donc pas avoir lieu. Les performances de l'accumulateur mettant en oeuvre l'électrolyte en sont donc affectées. Ce phénomène est exposé dans le document [6].

Il existe donc, au vu de ce qui précède, un besoin pour un électrolyte liquide ionique c'est-à-dire un électrolyte comprenant un liquide ionique jouant le rôle de solvant et un sel conducteur tel qu'un sel de lithium, qui lorsqu'il est mis en oeuvre dans un système électrochimique n'affecte pas de manière négative la réaction électrochimique et son rendement.

Il existe en particulier un besoin pour un électrolyte liquide ionique, qui lorsqu'il est utilisé dans un accumulateur tel qu'un accumulateur rechargeable au lithium ne détériore pas sa capacité.

En d'autres termes il existe un besoin pour un électrolyte liquide ionique, qui, tout en présentant tous les avantages des électrolytes liquides ioniques notamment en terme de sécurité d'utilisation, n'en présente pas les inconvénients en ce qui concerne la mobilité des ions tels que les ions lithium, le coefficient de diffusion des ions tels que les ions lithium, et donc les performances insuffisantes de l'accumulateur.

### EXPOSÉ DE L'INVENTION

Le but de la présente invention est de fournir un électrolyte liquide ionique comprenant un liquide ionique et un sel conducteur qui réponde entre autres aux besoins énumérés plus haut.

Le but de la présente invention est encore de fournir un électrolyte liquide ionique qui ne présente pas les inconvénients, défauts, limitations et désavantages des électrolytes liquides ioniques de l'art antérieur et qui résolve les problèmes de l'art antérieur.

Ce but, et d'autres encore sont atteints, conformément à l'invention, par un électrolyte liquide ionique comprenant au moins un liquide ionique de formule C⁺A⁻ où C⁺ représente un cation et A⁻ représente un anion, et au moins un sel conducteur, caractérisé en ce qu'il comprend en outre au moins un surfactant anionique.

Le surfactant anionique peut être choisi parmi les alkyl et alkylaryl-sulfates ; les savons tels que les sels de sodium d'acides gras ; les alkyl benzène sulfonates (ABS) ; les alcools sulfatés ; les alcools alkylés sulfatés ; les phosphates ; les gommes cellulosiques telles que la carboxyméthylcellulose sodique ; et leurs mélanges.

Les surfactants anioniques préférés sont choisis parmi les alkyl sulfates comme le dodécylsulfate de sodium (SDS), la carboxyméthylcellulose sodique, et le stéarate de sodium.

L'électrolyte liquide ionique selon l'invention peut ne comprendre qu'au moins un surfactant anionique mais il peut, en outre, comprendre au moins un autre surfactant qui n'est pas un surfactant anionique choisi parmi les surfactants cationiques, les surfactants non ioniques et les surfactants zwitterioniques.

Le surfactant non ionique peut être choisi parmi les alcools et alkyl (notamment en C₈-C₉) phénols (poly) éthoxylés et/ou (poly) propoxylés, les esters de polyol, les esters de saccharose, les alcanolamides grasses, les copolymères oxydes d'éthylène /oxyde de propylène, et leurs mélanges.

Les surfactants non ioniques préférés sont choisis parmi les TRITON^{®} X tels que le Triton^{®} X-100 dont la formule est donnée plus bas, qui sont des octylphénol polyéthoxylés, les Tergitol^{®} L (DOW) qui sont des copolymères oxyde d'éthylène/oxyde de propylène et les Tergitol^{®} NP (DOW) qui appartiennent à la famille des alkylphénol polyéthoxylés, plus précisément des nonylphénols polyéthoxylés.

L'électrolyte liquide ionique selon l'invention n'a jamais été décrit dans l'art antérieur.

L'électrolyte liquide ionique selon l'invention se distingue fondamentalement des électrolytes ioniques liquides de l'art antérieur en ce qu'il comprend un surfactant, ou tensioactif anionique.

Des tensioactifs sont certes souvent utilisés dans l'élaboration des électrodes d'accumulateurs mais la mise en oeuvre de tensioactifs spécifiquement de tensioactifs anioniques dans des électrolytes liquides, qui plus est des électrolytes liquides ioniques n'a jamais été décrite ou suggérée. Les électrodes sont constituées de matériaux totalement différents des électrolytes ioniques et les problèmes qui se posent dans les électrodes n'ont rien de commun avec les problèmes qui se posent dans les électrolytes et notamment dans les électrolytes liquides ioniques.

Il a été constaté de manière étonnante que l'addition d'un surfactant ou tensioactif anionique dans un électrolyte liquide ionique conduisait notamment à une augmentation surprenante de la mobilité du cation du sel conducteur tel que le cation lithium, ainsi que du coefficient de diffusion de ce cation, par rapport au même électrolyte liquide ionique ne comprenant pas de tensioactif anionique.

Les performances d'un système électrochimique, par exemple d'un accumulateur, utilisant l'électrolyte selon l'invention sont améliorées, en particulier en terme de capacité pratique lorsqu'on les compare aux performances d'un système électrochimique, par exemple d'un accumulateur, utilisant un électrolyte analogue mais sans tensioactif anionique.

L'électrolyte selon l'invention ne présente pas les inconvénients des électrolytes liquides ioniques de l'art antérieur notamment quant à la dégradation des performances des dispositifs électrochimiques tels que des accumulateurs mettant en oeuvre ces électrolytes.

L'électrolyte selon l'invention apporte une solution aux problèmes qui étaient rencontrés dans les électrolytes liquides ioniques de l'art antérieur tout en présentant toujours les avantages inhérents aux électrolytes dont le solvant est un liquide ionique pour ce qui est de la sécurité, de la non inflammabilité, de la faible tension de vapeur etc.

Avantageusement le cation C⁺ du liquide ionique est choisi parmi les cations organiques.

Ainsi, le cation C⁺ du liquide ionique peut être choisi parmi les cations hydroxonium, oxonium, ammonium, amidinium, phosphonium, uronium, thiouronium, guanidinium, sulfonium, phospholium, phosphorolium, Iodonium, carbonium ; les cations hétérocycliques tels que les cations pyridinium, quinolinium, isoquinolinium, imidazolium, pyrazolium, , imidazolinium, triazolium, pyridazinium, pyrimidinium, pyrrolidinium, thiazolium, oxazolium, pyrazinium, piperazinium, pipéridinium, pyrrolium, pyrizinium, indolium, quinoxalinium, thiomorpholinium, morpholinium, et indolinium ; et les formes tautomères de ceux-ci.

Avantageusement, le cation C⁺ du liquide ionique est choisi parmi les imidazoliums non substitués ou substitués tels que les di-, tri-, tétra- et penta-alkyl imidazoliums, les ammoniums quaternaires, les pipéridiniums non substitués ou substitués tels que les dialkylpiperidiniums, les pyrrolidiniums non substitués ou substitués tels que les dialkylpyrrolidiniums, les pyrazoliums non substitués ou substitués tels que les dialkylpyrazoliums, les pyridiniums non substitués ou substitués tels que les alkylpyridiniums, les phosphoniums tels que les tétraalkylphosphoniums, les sulfoniums tels que les trialkylsulfoniums, et les formes tautomères de ceux-ci.

De préférence le cation C⁺ du liquide ionique est choisi parmi les pipéridiniums tels que les dialkylpipéridiniums ; les ammoniums quaternaires tels que les ammoniums quaternaires portant quatre groupes alkyles ; les imidazoliums tels que les imidazoliums di-, tri-, tétra-, et penta substitués comme les di-, tri-, tétra- et penta-alkyl, imidazoliums ; et les formes tautomères de ceux-ci.

L'anion A⁻ du liquide ionique peut être choisi parmi les halogénures tels que Cl-, BF₄⁻, B(CN)₄⁻, CH₃BF₃⁻, CH₂CHBF₃⁻, CF₃BF₃⁻, m-CₙF₂ₙ₊₁BF₃⁻ où n est un entier tel que 1≤n≤10, PF6⁻, CF₃CO₂⁻, CF₃SO₃⁻, N(SO₂CF₃)₂⁻, N(COCF₃) (SOCF₃)⁻, N(CN)₂⁻, C(CN)₃⁻, SCN⁻, SeCN⁻, CuCl₂⁻, et AlCl₄⁻.

L'anion A⁻ du liquide ionique est choisi de préférence parmi BF₄⁻ et TFSI-(N(SO₂CF₃)₂).

Un liquide ionique préféré comprend un cation C⁺ choisi parmi les pipéridiniums, les ammoniums quaternaires et les imidazoliums, associé à un anion choisi parmi BF₄⁻ et TFSI-(N(SO₂CF₃)₂⁻) .

Un liquide ionique particulièrement préféré est le BMIBF₄ ou 1-butyl-3-méthylimidazolium tétrafluoroborate.

Avantageusement, le sel conducteur est choisi parmi les sels de lithium.

Ainsi, le sel conducteur peut être choisi parmi le LiPF₆ : hexafluorophosphate de lithium, le LiPF₄ : tétrafluoroborate de lithium, le LiAsF₆ : hexafluoroarsenate de lithium, le LiClO_{4 :} perchlorate de lithium, le LiBOB : bis oxalatoborate de lithium, le LiFSI : bis (fluorosulfonyl) imidure de lithium, les sels de formule générale Li [N (SO₂CₙF₂ₙ₊₁) (SO₂CₘF₂ₘ₊₁)]) où n et m identiques ou différents sont des entiers naturels compris entre 1 et 10 tels que le LiTFSI : bis (trifluorométhylsulfonyl) imidure de lithium ou LiN(CF₃SO₂)₂, ou le LiBeti : bis (perfluoroéthylsulfonyl) imidure de lithium, le LiODBF, le LiB(C₆H₅), le LiCF₃SO₃, le LiC(CF₃SO₂)₃ (LiTFSM), et leurs mélanges.

De préférence, le sel conducteur est choisi parmi LiTFSI, LiPF, LiFSI, LiBF₄, et leurs mélanges.

L'électrolyte selon l'invention peut comprendre de 0,001 à 0,5 moles de surfactant anionique par mole de solvant liquide ionique préférentiellement autour de 0,1 mole.

Avantageusement, l'électrolyte selon l'invention peut comprendre de 0,1 à 10 mol/L de sel conducteur.

L'électrolyte selon l'invention peut comprendre en outre au moins un solvant organique tel que ceux traditionnellement employés par l'homme du métier dans les électrolytes. Le solvant organique optionnel permet notamment d'abaisser la viscosité de l'électrolyte.

Mais l'électrolyte selon l'invention peut n'être constitué que par le ou les électrolyte(s) ionique (s), le ou les sel (s) conducteur (s), et le ou les surfactant(s).

Un électrolyte liquide ionique particulièrement préféré selon l'invention comprend 1,6 mol/L de LiPF₆ dans un mélange équimolaire de solvant liquide ionique BMIBF₄ et de SDS.

L'invention a aussi trait à un dispositif ou système électrochimique qui comprend un électrolyte liquide ionique tel que décrit ci-dessus.

Ce système électrochimique peut être en particulier un accumulateur électrochimique rechargeable tel qu'un accumulateur au lithium comprenant l'électrolyte liquide ionique tel que décrit ci-dessus, une électrode positive, et une électrode négative.

L'accumulateur peut avoir notamment la forme d'une pile bouton.

L'invention va maintenant être décrite de manière plus précise dans la description qui suit, donnée à titre illustratif et non limitatif, en référence aux dessins joints dans lesquels :
La figure 1 est une vue schématique en coupe verticale d'un accumulateur sous forme de pile bouton comprenant un électrolyte, par exemple un électrolyte à tester, selon l'invention, tel que l'électrolyte préparé dans l'Exemple 1 ou dans l'Exemple 2.

Cette description se réfère généralement plus particulièrement à un mode de réalisation dans lequel l'électrolyte liquide ionique est l'électrolyte liquide ionique d'un accumulateur rechargeable au lithium, mais il est bien évident que la description qui suit pourra facilement être étendue, le cas échéant, à tout électrolyte liquide ionique pouvant être mis en oeuvre dans tout dispositif ou système électrochimique.

L'électrolyte liquide ionique selon l'invention comprend au moins un liquide ionique, jouant le rôle de solvant, de formule C⁺A⁻ où C⁺ représente un cation et A⁻ représente un anion, au moins un sel conducteur, et en outre au moins un surfactant anionique.

Par au moins un liquide ionique on entend que l'électrolyte selon l'invention peut comprendre un seul liquide ionique ou qu'il peut comprendre plusieurs de ces liquides ioniques qui peuvent différer par exemple par la nature du cation et/ou de l'anion les constituant.

De même, par au moins un sel conducteur et au moins un surfactant anionique on entend que l'électrolyte selon l'invention peut comprendre respectivement un seul ou plusieurs sel(s) conducteur(s) et un seul ou plusieurs surfactant(s) anionique (s).

Le liquide ionique de l'électrolyte selon l'invention joue le rôle de solvant pour le sel conducteur. Par « liquide » on entend généralement que le solvant liquide ionique est liquide dans une plage de température de 0 à 200°C, et qu'il est notamment liquide au voisinage de la température ambiante à savoir de 15 à 30°C, de préférence de 20 à 25°C.

Il n'existe aucune limitation quant au choix pour le cation C⁺ du liquide ionique.

De préférence, le cation C⁺ est choisi parmi les cations organiques, notamment les cations organiques « volumineux », c'est-à-dire les cations comportant des groupes connus de l'homme du métier en chimie organique pour présenter un encombrement stérique important.

Ainsi, le cation C⁺ du liquide ionique peut être choisi parmi les cations hydroxonium, oxonium, ammonium, amidinium, phosphonium, uronium, thiouronium, guanidinium, sulfonium, phospholium, phosphorolium, Iodonium, carbonium ; les cations hétérocycliques, et les formes tautomères de ces cations.

Par cations hétérocycliques on entend des cations issus d'hétérocycles c'est-à-dire des cycles comprenant un ou plusieurs hétéroatomes choisi(s) généralement parmi, N, O, P, et S.

Ces hétérocycles peuvent être saturés, insaturés, ou aromatiques, et ils peuvent en outre être condensés avec un ou plusieurs autres hétérocycles et/ou un ou plusieurs autres cycles carbonés saturés, insaturés ou aromatiques.

En d'autres termes ces hétérocycles peuvent être monocycliques ou polycycliques.

Ces hétérocycles peuvent en outre être substitués par un ou plusieurs substituants, choisi(s) de préférence parmi les groupes alkyle linéaires ou ramifiés de 1 à 20 atomes de carbone tels que les groupes méthyle, éthyle, n-propyle, i-propyle, n-butyle, i-butyle, et t-butyle; les groupes cycloalkyle de 3 à 7C ; les groupes alcényles linéaires ou ramifiés de 1 à 20 atomes de carbone ; les groupes alcynyles linéaires ou ramifiés de 1 à 20 atomes de carbone ; les groupes aryle de 6 à 10 atomes de carbone tel que le groupe phényle ; les groupes alkyl (1 à 20 C) - aryle (6 à 10 C) tels que le groupe benzyle.

Les cations hétérocycliques pourront être choisis parmi les cations pyridinium, quinolinium, isoquinolinium, imidazolium, pyrazolium, , imidazolinium, triazolium, pyridazinium, pyrimidinium, pyrrolidinium, thiazolium, oxazolium, pyrazinium, piperazinium, pipéridinium, pyrrolium, pyrizinium, indolium, quinoxalinium, thiomorpholinium, morpholinium, et indolinium.

Ces cations pouvant être éventuellement substitués comme défini ci-dessus.

Les cations hétérocycliques incluent aussi les formes tautomères de ceux-ci.

On donne ci-dessous des exemples de cations hétérocycliques qui peuvent constituer le cation C⁺ du solvant liquide ionique de l'électrolyte selon l'invention :

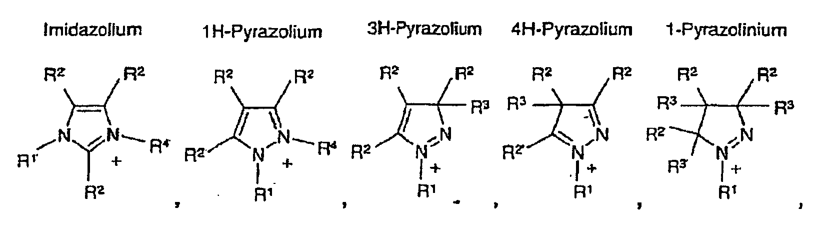

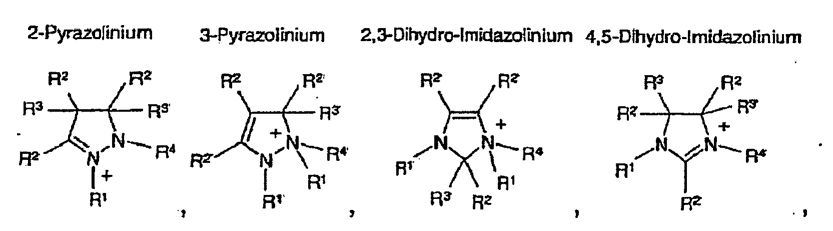

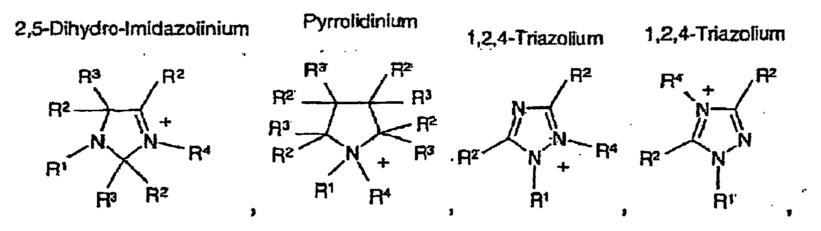

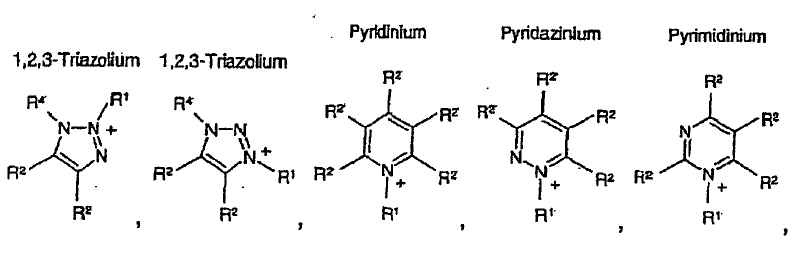

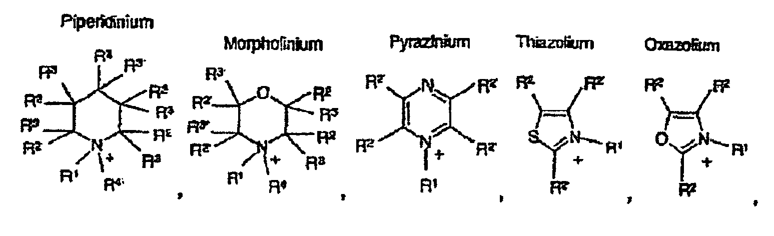

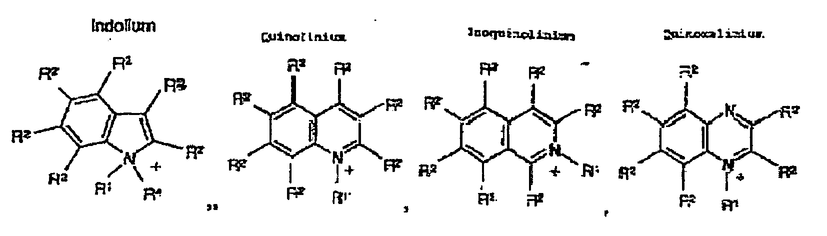

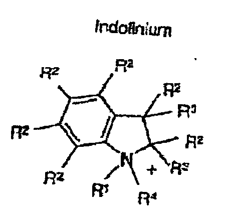

Dans ces formules les groupes R¹, R², R³ et R⁴, indépendamment les uns des autres, représentent un atome d'hydrogène ou un substituant choisi de préférence parmi les groupes déjà énumérés plus haut, notamment les groupes alkyle linéaires ou ramifiés de 1 à 20 C.

La diversité des liquides ioniques est telle qu'il est possible de préparer un grand nombre d'électrolytes. Cependant, des familles de liquides ioniques sont plus intéressantes, notamment pour les applications plus particulièrement visées dans la présente. Ces familles de liquides ioniques sont définies par le type de cation C⁺ mis en oeuvre.

Ainsi, de préférence, le cation C⁺ du liquide ionique de l'électrolyte selon l'invention sera choisi parmi les imidazoliums non substitués ou substitués tels que les di-, tri-, tétra- et penta-alkyl, imidazoliums, les ammoniums quaternaires, les pipéridiniums non substitués ou substitués tels que les dialkylpipéridiniums, les pyrrolidiniums non substitués ou substitués tels que les dialkylpyrrolidiniums, les pyrazoliums non substitués ou substitués, les dialkylpyrazoliums, les pyridiniums non substitués ou substitués tels que les alkylpyridiniums, les phosphoniums les tétraalkylphosphoniums, et les sulfoniums tels que les trialkylsulfoniums.

De préférence le cation C⁺ du liquide ionique est choisi parmi les pipéridiniums tels que les dialkylpipéridiniums, les ammoniums quaternaires tels que les ammoniums quaternaires portant quatre groupes alkyles, et les imidazoliums tels que les imidazoliums di-, tri-, terta-, et penta substitués comme les di-, tri-, tétra- et penta-alkyl, imidazoliums.

Comme on l'a déjà précisé plus haut, les groupes alkyle ont de 1 à 20 C et peuvent être linéaires ou ramifiés.

Parmi ces cations les dialkylpipéridinium, les ammoniums quaternaires portant quatre groupes alkyles, et les di-, tri-, tétra- et penta-alkyl, imidazoliums sont particulièrement préférés. Toutefois, en ce qui concerne les cations imidazolium les imidazolium di et trisubstitués présentent de meilleures propriétés physico-chimiques et électrochimiques et sont donc encore plus préférés.

Ces cations préférés ont été sélectionnés car le cation imidazolium possède les conductivités ioniques les plus grandes ainsi que la plus faible viscosité. Le cation pipéridinium montre lui une très grande stabilité électrochimique et des grandeurs de conductivité ionique et de viscosité moyenne. Enfin, Les ammoniums quaternaires sont très stables électrochimiquement mais présentent des conductivités ioniques très faibles.

De même, Il n'existe aucune limitation quant au choix pour l'anion A⁻ du liquide ionique.

De préférence le cation A⁻ du liquide ionique est choisi parmi les halogénures tels que Cl-, BF₄⁻, B(CN)₄⁻, CH₃BF₃⁻, CH₂CHBF₃⁻, CF₃BF₃⁻, m-CₙF₂ₙ₊₁BF₃⁻ (où n est un entier tel que 1≤n≤10) , PF₆⁻, CF₃CO₂⁻, CF₃SO₃⁻, N(SO₂CF₃)₂⁻, N(COCF₃) (SOCF₃)⁻, N(CN)₂⁻, C(CN)₃⁻, SCN⁻, SeCN⁻, CuCl₂⁻, et AlCl₄⁻.

Des anions particulièrement préférés sont les anions BF₉⁻ et TFSI-(N(SO₂CF₃)₂⁻).

Ces anions permettent en effet d'augmenter la conductivité ionique et de diminuer la viscosité. De plus l'anion TFSI⁻ est légèrement plus stable à haut potentiel. Il est bien évident que d'autres anions peuvent toutefois être choisis.

Un liquide ionique particulièrement préféré pour l'électrolyte liquide ionique selon l'invention comprend en tant qu'anion un anion BF₄⁻ ou TFSI-(N(SO₂CF₃)₂⁻) et en tant que cation un cation pipéridinium, ammonium quaternaire ou imidazolium. L'association d'un tel anion et d'un tel cation communique à l'électrolyte liquide ionique des propriétés extrêmement avantageuses.

Un exemple de liquide ionique convenant particulièrement bien à une utilisation dans l'électrolyte liquide ionique selon l'invention est le BMIBF₄ ou 1-butyl-3-méthylimidazolium tétrafluoroborate.

D'autres exemples de liquides ioniques sont donnés dans les documents [4] et [5], à la description desquels on pourra se référer.

Il n'existe aucune limitation quant au choix du sel conducteur de l'électrolyte liquide ionique selon l'invention.

Le sel conducteur est de préférence un sel de lithium, notamment dans le cas où l'électrolyte liquide ionique selon l'invention est l'électrolyte d'un accumulateur rechargeable au lithium ou au lithium-ion.

Ce sel de lithium peut être choisi parmi le LiPF₆: hexafluorophosphate de lithium, le LiPF₄ : tétrafluoroborate de lithium, le LiAsF₆ : hexafluoroarsenate de lithium, le LiClO₄ : perchlorate de lithium, le LiBOB : bis oxalatoborate de lithium, le LiFSI : bis (fluorosulfonyl) imidure de lithium, les sels de formule générale Li [N (SO₂CₙF₂ₙ₊₁) (SO₂CₘF₂ₘ₊₁)] où n et m identiques ou différents sont des entiers naturels compris entre 1 et 10, tels que le LiTFSI : bis (trifluorométhylsulfonyl) imidure de lithium ou LiN(CF₃SO₂)₂, ou le LiBeti : bis (perfluoroéthylsulfonyl) imidure de lithium, le LiODBF, le LiB(C₆H₅), le LiCF₃SO₃, le LiC(CF₃SO₂)₃ (LiTFSM), et leurs mélanges.

Les sels de lithium à ajouter dans les liquides ioniques sont préférentiellement, dans l'ordre :
o 1^{er} : LiTFSI,
o 2^{ème} : LiPF₆,
o 3^{ème} : LiFSI,
o 4^{ème} : LiBF₄.

En effet, les meilleures conductivités ioniques sont obtenues pour ces sels, et de plus avec LiTFSI la viscosité est la plus faible.

La concentration totale du ou des sels conducteur(s) dans les liquides ioniques peut être comprise entre 0,1 mol/l par litre de solvant liquide ionique jusqu'à leur limite de solubilité dans le solvant liquide ionique choisi, de préférence elle est de 0,1 à 10 mol/l.

Le surfactant anionique peut être considéré comme le constituant essentiel, fondamental de l'électrolyte selon l'invention car c'est le constituant qui différencie l'électrolyte selon l'invention des électrolytes de l'art antérieur et que c'est ce surfactant qui est à l'origine des propriétés surprenantes et avantageuses de l'électrolyte selon l'invention.

Rappelons tout d'abord qu'un surfactant, aussi appelé agent dispersant, agent mouillant, ou tensioactif est un produit chimique possédant des propriétés amphiphiles c'est-à-dire qu'il présente deux parties de polarités différentes :
o une partie lipophile apolaire qui retient les matières 'grasses' (possédant une chaîne carbonée),
o une partie hydrophile polaire.

De manière générale, ces agents dispersants permettent de fixer les particules hydrophobes (ou lipophiles) contenues dans une solution hydrophile telle que l'eau ce qui permet de créer une dispersion. De plus ils permettent de diminuer les interactions des surfaces car ils abaissent l'énergie libre.

Il existe quatre types de surfactants ou tensioactifs :
o Les tensioactifs anioniques dans lesquels la partie hydrophile polaire de la molécule est chargée négativement,
o Les tensioactifs cationiques dans lesquels la partie hydrophile est chargée positivement,
o Les tensioactifs zwiterionniques ou amphotères qui comportent une charge positive et négative, la charge globale de la partie polaire est nulle,
o Les tensioactifs non ioniques dans lesquels la molécule ne comporte aucune charge nette.

Le surfactant, tensioactif, mis en oeuvre dans l'électrolyte liquide ionique selon l'invention est un tensioactif anionique.

Cependant, l'électrolyte liquide ionique selon l'invention peut, outre un ou plusieurs surfactant(s) anionique(s), comprendre en outre un ou plusieurs surfactants qui ne sont pas des surfactants anioniques et qui est(sont) choisi(s) parmi les surfactants cationiques, non ioniques, et zwitterioniques.

Les liquides ioniques sont des solvants particuliers dans lesquels un grand nombre d'interactions intra et intermoléculaires prennent place par exemple : interactions coulombiennes, interactions dipôle-dipôle, liaisons hydrogène, forces de Van Der Waals etc. et les inventeurs ont mis en évidence que l'addition d'un surfactant anionique à un électrolyte liquide ionique comprenant un solvant liquide ionique permet, sans vouloir être lié par aucune théorie, de réaliser deux actions :
o Une première action est de diminuer l'encombrement stérique de la structure complexe autour du cation du sel conducteur, tel que l'ion lithium, et donc ainsi accroître la mobilité de ce cation tel que le cation lithium.
o Une deuxième action est de piéger le cation du liquide ionique en l'associant à une molécule volumineuse chargée négativement avec laquelle il s'associe grâce à des interactions coulombiennes provoquant ainsi la diminution de son coefficient de diffusion et donc de sa mobilité dans le milieu.

Le mode d'action des surfactants anioniques et des surfactants non ioniques éventuels est précisé ci-dessous.

Le surfactant anionique peut être choisi parmi les alkyl sulfates et alkyl aryl sulfates ; les savons tels que les sels de sodium d'acides gras ; les alkyl benzène sulfonates (ABS) ; les alcools sulfatés, les alcools alkylés sulfatés ; les phosphates ; les gommes cellulosiques telles que la carboxyméthylcellulose sodique ; et leurs mélanges. De préférence il est choisi parmi les alkyl sulfates, dont le groupe alkyle comprend généralement de 1 à 20 C, tel que le dodécylsulfate de sodium (SDS) aussi appelé laurylsulfate de sodium (formule I ci-dessous) de formule chimique NaC₁₂H₂₅SO₄ ; et la carboxyméthylcellulose sodique (formule II ci-dessous).

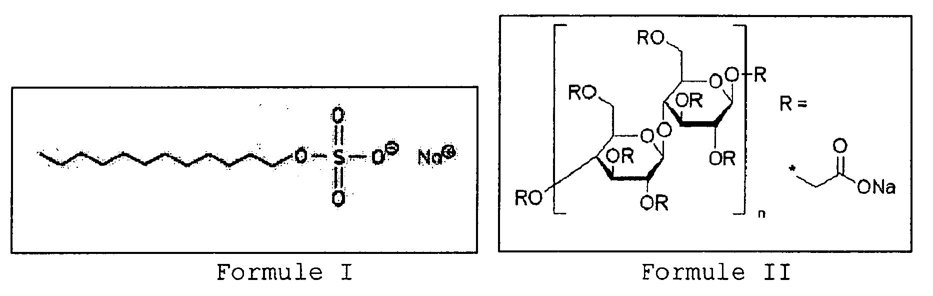

Le surfactant non ionique éventuel peut être choisi parmi les alcools et alkyl (notamment en C₈-C₉) phénols (poly) éthoxylés et/ou (poly) propoxylés, les esters de polyol, les esters de saccharose, les alcanolamides grasses, les copolymères oxydes d'éthylène/oxyde propylène, et leurs mélanges.

Les surfactants non ioniques éventuels préférés sont choisis parmi les TRITON^{®} X tels que le Triton^{®} X-100 dont la formule est donnée plus bas, qui sont des octylphénol polyéthoxylés, les Tergitol^{®} L (DOW) qui sont des copolymères oxyde d'éthylène/oxyde de propylène, aussi dénommés "Polyéther polyols", et les Tergitol^{®} NP (DOW) qui appartiennent à la famille des alkylphénol polyéthoxylés, plus précisément des nonylphénols polyéthoxylés, et qui sont aussi dénommés "Nonylphénol éthoxylés".

Le Triton^{®} X-100 répond à la formule III ci-dessous dans laquelle n représente 9 ou 10. Le Triton^{®} X-100 est disponible notamment auprès de la société Sigma Aldrich^{®}.

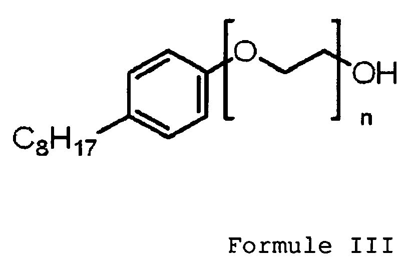

L'électrolyte selon l'invention comprend généralement de 0,001 à 0,5 moles de surfactant anionique par mole de solvant liquide ionique.

Ainsi, le nombre de moles de surfactant à ajouter peut être de moitié inférieure au nombre de moles du solvant liquide ionique. Toutefois des quantités inférieures par exemple de 0,01 à 0,1 peuvent être ajoutées.

En ajoutant un surfactant anionique à un électrolyte liquide ionique, le nombre de porteurs de charges au sein de l'électrolyte liquide ionique va augmenter, ce qui peut être gênant au niveau de la compétition entre les différents ions en solution. Cependant le surfactant anionique est généralement composé d'une molécule anionique volumineuse associée à un petit cation. Il va se produire des interactions coulombiennes entre le cation du liquide ionique et l'anion du surfactant provoquant leur association. Il y aura donc création de paires d'ions entre le cation du liquide ionique et l'anion du surfactant ce qui aura pour conséquence de freiner, de piéger, le cation du liquide ionique, qui présente au départ une mobilité plus grande que celle du cation du sel conducteur tel que le cation lithium.

Le cation du liquide ionique diffusera alors dans le milieu moins rapidement. Il n'encombrera donc plus la surface de l'électrode chargée négativement vers laquelle ne diffuse pas le cation lithium et dans laquelle il doit s'insérer pour assurer le passage du courant. La compétition entre les deux cations est donc réduite.

L'addition éventuelle d'un surfactant non ionique dans un mélange de liquides ioniques et d'un soluté tel qu'un sel de lithium permet la formation de micelles qui limitent le pouvoir de solvatation du liquide ionique. Ainsi l'ion tel que l'ion lithium dissout dans le liquide ionique voit sa couche de solvatation («solvation» en anglais) réduite par l'ajout du surfactant. Concrètement, le nombre de molécules de solvant, à savoir le nombre d'anions et de cations du liquide ionique, autour du cation tel que le cation lithium est plus faible, réduisant donc son encombrement stérique. La mobilité du cation tel que le cation lithium va augmenter, de même que son coefficient de diffusion, et les performances du dispositif, système électrochimique contenant l'électrolyte liquide ionique tel qu'un accumulateur vont être améliorées en terme de capacité pratique.

De plus le volume réel occupé par le lithium et sa sphère de solvatation étant plus faible, l'insertion dans les matériaux d'électrodes se trouve alors facilitée et l'échange électronique dans l'électrode est plus rapide.

Par ailleurs, plus la couche de solvatation est importante autour du cation tel que le cation lithium, plus les risques de détériorer les matériaux d'électrodes lors de son insertion sont importants, réduisant alors l'efficacité de l'électrode et donc les performances de l'accumulateur. En conséquence, réduire la couche de solvatation minimise le risque de détérioration de la structure de l'électrode.

Enfin, le surfactant anionique et le surfactant non ionique éventuel vont agir sur la couche de passivation de l'électrode négative. Cette couche en présence du surfactant va être plus fine et plus homogène, limitant la formation de dendrites et donc diminuant le risque de courts-circuits.

Il a été en outre constaté que l'ajout d'un surfactant anionique, tel que le dodécyl sulfate de sodium (SDS), à un électrolyte liquide ionique a généralement pour conséquence de diminuer la conductivité ionique dans l'électrolyte liquide ionique.

Cette diminution de la conductivité ionique peut sembler pénalisante. Toutefois, malgré cette diminution, et de manière étonnante, les performances en cyclage de l'accumulateur contenant l'électrolyte liquide avec un surfactant anionique sont accrues, et la capacité pratique de l'accumulateur est meilleure.

En pratique, il a été observé une augmentation de capacité de 5% sur les premiers cycles pour l'électrolyte avec un additif surfactant anionique ; de plus il y a moins de capacité irréversible au premier cycle, par rapport à un système sans surfactant.

De plus l'ajout d'un surfactant anionique tel que le SDS, s'accompagne d'une structuration de l'électrolyte et d'une augmentation de sa viscosité.

En effet, il se forme un gel d'électrolyte liquide ionique. Ceci prouve qu'il existe des interactions dans le volume de l'électrolyte.

En résumé on peut dire que l'électrolyte ionique selon l'invention présente notamment les avantages suivants :
o L'électrolyte liquide ionique avec un surfactant anionique en tant qu'additif permet d'augmenter la capacité pratique de l'accumulateur par rapport à un accumulateur contenant un électrolyte liquide ionique sans additif surfactant anionique.
o L'électrolyte selon l'invention permet de diminuer la solvatation des ions non organiques en solution.
o L'électrolyte favorise l'insertion du lithium dans les matériaux d'intercalation.
o L'électrolyte selon l'invention est stable à haute température et peut donc être utilisé à des températures bien supérieures à 60°C.
o L'électrolyte favorise la diffusion du cation lithium.

L'électrolyte selon l'invention peut ne contenir que le ou les liquide(s) ionique(s), que le ou les sel(s) conducteur(s) et que le ou les surfactants(s), en d'autres termes l'électrolyte selon l'invention peut être constitué par le ou les liquide(s) ionique(s), le ou les sel(s) conducteur(s), le ou les surfactant(s) anioniques et le ou les autres surfactant(s) (non anionique(s)) éventuel (s) .

L'électrolyte selon l'invention peut contenir en outre d'autres composants tels que des solvants organiques. Par exemple l'électrolyte liquide ionique selon l'invention peut en outre comprendre un ou plusieurs solvants organiques « classiques » (c'est-à-dire des solvants qui ne sont pas des liquides ioniques) tels que les solvants couramment utilisés dans les électrolytes comme les carbonates, dans une proportion de 5 à 20 % en masse de la masse de l'électrolyte, notamment afin d'abaisser la viscosité de l'électrolyte.

L'électrolyte liquide ionique décrit plus haut peut être utilisé dans tout système électrochimique mettant en oeuvre un électrolyte.

Ce système électrochimique peut être notamment un accumulateur électrochimique rechargeable à électrolyte non aqueux tel qu'un accumulateur ou batterie au lithium, qui outre l'électrolyte liquide ionique tel que défini plus haut comprend une électrode positive et une électrode négative.

Les électrodes comprennent un liant qui est généralement un polymère organique, une matière électrochimiquement active d'électrode positive ou négative, éventuellement un ou des additif(s) conducteur(s) électronique(s), et un collecteur de courant.

Dans l'électrode positive la matière électrochimiquement active peut être choisie parmi les composés déjà cités plus haut dans la présente description; et parmi LiCoO₂ ; les composés dérivés de LiCoO₂ obtenus par substitution de préférence par Al, Ti, Mg, Ni et Mn, par exemple LiAlₓNi_{y}Co(_{1-x-y})O₂ ou x <0,5 et y <1, LiNiₓMnₓCo₁₋₂ₓO₂ ; LiMn₂O₄ ; LiNiO₂ ; les composés dérivés de LiMn₂O₄ obtenus par substitution de préférence par Al, Ni et Co ; LiMnO₂; les composés dérivés de LiMnO₂ obtenus par substitution de préférence par Al, Ni, Co, Fe, Cr et Cu, par exemple LiNi_{0,5}O₂ ; les olivines LiFePO₄, Li₂FeSiO₄, LiMnPO₄, LiCoPO₄ les phosphates et sulfates de fer hydratés ou non ; LiFe₂(PO₄)₃ ; les phosphates et les sulfates de vanadyle hydratés ou non, par exemple VOSO₄ et LiₓVOPO₄ ; nH₂O (0<x<3, 0<n<2) ; Li₍₁₊ₓ₎V₃O₈, 0<x<4 ; LiₓV₂O₅, nH₂O, avec 0<x<3 et 0<n<2 ; et leurs mélanges.

Dans l'électrode négative, la matière électrochimiquement active peut être choisie parmi les composés déjà cités plus haut dans la présente description; et parmi les composés carbonés tels que les graphites naturels ou synthétiques et les carbones désordonnés ; les alliages de lithium de type LiₓM avec M=Sn, Sb, Si; les composés LiₓCu₆Sn₅ avec 0<x<13 ; les borates de fer ; les oxydes simples à décomposition réversible par exemple CoO, Co₂O₃, Fe₂O₃ ; les pnicures, par exemple Li_{(3-x-y)}Co_{y}N, Li_{(3-x-y)}Fe_{y}N, LiₓMnP₄, LiₓFeP₂ ; LiₓFeSb₂ ; et les oxydes à insertion tels que les titanates par exemple TiO₂, Li₄Ti₅O₁₂, LiₓNiP₂ , LiₓNiP₃, MoO₃ et WO₃ et leurs mélanges, ou tout matériau connu de l'homme du métier dans ce domaine de la technique.

L'additif conducteur électronique éventuel peut être choisi parmi les particules métalliques telles que les particules d'Ag, le graphite, le noir de carbone, les fibres de carbone, les nanofils de carbone, les nanotubes de carbone et les polymères conducteurs électroniques, et leurs mélanges.

Les collecteurs de courant sont généralement en cuivre pour l'électrode négative, ou en aluminium pour l'électrode positive.

L'accumulateur peut avoir notamment la forme d'une pile bouton.

Les différents éléments d'une pile bouton, en acier inoxydable 316L, sont décrits sur la figure 1.

Ces éléments sont les suivants :
- les parties supérieure (5) et inférieure (6) du boîtier en inox,
- le joint en polypropylène (8),
- les cales en inox (4), qui servent à la fois éventuellement à la découpe du lithium métal puis, plus tard, à assurer le bon contact des collecteurs de courant avec les parties externes de la pile,

- un ressort (7), qui assure le contact entre tous les éléments,
- un séparateur microporeux (2),
- des électrodes (1) (3).

L'invention va maintenant être décrite en référence à l'exemple suivant, donné à titre illustratif et non limitatif.

### Exemple :

On prépare un électrolyte conforme à l'invention comprenant un liquide ionique, un sel de lithium et un surfactant anionique.
o Le liquide ionique est le BMIBF₄ ou 1-butyl-3-méthylimidazolium tétrafluoroborate.
o Le sel de lithium est le LiPF₆, ou hexafluorophosphate de lithium.
o Le surfactant est le sodium dodecyl sulfate ou SDS.

L'électrolyte est formulé en dissolvant 1,6 mol/l de LiPF₆ dans un mélange équimolaire de solvant liquide ionique BMIBF₄ et de SDS.

L'électrolyte préparé ci-dessus dans l'exemple a ensuite été testé en cellule format pile bouton.

On a testé dans les mêmes conditions le même électrolyte sans surfactant anionique.

Chaque pile bouton est montée en respectant scrupuleusement le même protocole. Sont ainsi empilés à partir du fond du boîtier de la pile comme cela est montré sur la figure 1 :
- une électrode négative (1) 0 14 mm, il s'agit pour ces tests d'une électrode dont la matière active est du Li₄Ti₅O₁₂, mais on pourrait utiliser toute autre matière active d'électrode négative choisie notamment parmi les matières actives classiques utilisées dans la technique pour une électrode négative en milieu non aqueux ;
- 200 µl d'électrolyte tel que préparé dans l'exemple ou bien l'électrolyte sans surfactant anionique ;
- un séparateur qui est une membrane microporeuse en polyoléfine, plus précisément une membrane microporeuse en polypropylène Celgard^{©} (2) 0 16,5 mm ;
- une électrode positive dont la matière active est du LiNi_{0.5}Mn_{1.5}O₄, mais on pourrait utiliser une pastille de lithium ou tout autre type de matière active d'électrode positive choisie notamment parmi les matières actives classiques utilisées dans la technique pour une électrode positive en milieu non aqueux ;
- un disque ou cale en inox (4),
- un couvercle en inox (5) et un fond en inox (6),
- un ressort en inox (7) et un joint en polypropylène (8).

Le boîtier en inox est alors fermé à l'aide d'une sertisseuse, le rendant parfaitement étanche à l'air. Pour vérifier si les piles sont opérationnelles, celles-ci sont contrôlées par la mesure de la tension à l'abandon.

Du fait de la forte réactivité du lithium et de ses sels à l'oxygène et à l'eau, la mise en pile bouton se fait en boîte à gants. Celle-ci est maintenue en légère surpression sous atmosphère d'argon anhydre. Des capteurs permettent de surveiller continuellement la concentration en oxygène et en eau. Typiquement, ces concentrations doivent rester inférieures au ppm.

L'électrolyte préparé dans l'exemple et l'électrolyte sans surfactant anionique, sont montés dans les piles boutons conformément à la procédure décrite ci-dessus et subissent des cyclages, c'est-à-dire des charges et des décharges à courant constant à différents régimes pendant 20 cycles pour évaluer la capacité pratique de la pile.

Une fois la pile bouton faite, on lui fait subir des charges et décharges à courant constant à différents régimes pendant 20 cycles pour évaluer la capacité pratique de la pile.

Il a été observé une augmentation de capacité de 5% sur les premiers cycles pour l'électrolyte avec l'additif surfactant anionique ; de plus il y a moins de capacité irréversible au premier cycle, par rapport à un système sans surfactant.

### RÉFÉRENCES

[1] J. FULLER et al, J.Electrochem. Soc., Vol. 144, No 11, November 1997, 3881 - 3886.
[2] A. CHAGNES et al, Journal of Power Sources 145 (2005), 82 - 88.
[3] E. MARKEVICH et al, Electrochemistry Communications 8 (2006), 1331 - 1334.
[4] EP-A1-1 734 047
[5] WO-A2-2007/068822
[6] S-Y. LEE et al, J. Phys. Chem. B 2005, 109, 13663-13667.

## Revendications

1. Électrolyte liquide ionique comprenant au moins un liquide ionique de formule C⁺A⁻ où C⁺ représente un cation et A⁻ représente un anion, et au moins un sel conducteur, **caractérisé en ce qu'**il comprend en outre au moins un surfactant anionique.

2. Électrolyte selon la revendication 1 dans lequel le surfactant anionique est choisi parmi les alkyl et alkylaryl sulfates ; les savons tels que les sels de sodium d'acides gras ; les alkyl benzène sulfonates (ABS) ; les alcools sulfatés ; les alcools alkylés sulfatés ; les phosphates ; les gommes cellulosiques telles que la carboxyméthylcellulose sodique ; et leurs mélanges.

3. Electrolyte selon la revendication 2 dans lequel le surfactant anionique est choisi parmi les alkyl sulfates comme le dodécylsulfate de sodium (SDS), la carboxyméthylcellulose sodique, et le stéarate de sodium.

4. Electrolyte selon l'une quelconque des revendications 1 à 3 qui comprend en outre au moins un autre surfactant choisi parmi les surfactants cationiques ; les surfactants non ioniques tels que les alcools et alkyl (notamment en -C₈-C₉) phénols (poly) éthoxylés et/ou (poly) propoxylés, les esters de polyol, les esters de saccharose, les alcanolamides grasses, les copolymères oxyde d' éthylène/oxyde de propylène, et leurs mélanges ; et les surfactants zwitterioniques.

5. Electrolyte selon la revendication 4 dans lequel le surfactant non ionique est choisi parmi les TRITON^{®} X tels que le Triton^{®} X-100, les Tergitol^{®} L et les Tergitol^{®} NP.

6. Électrolyte selon l'une quelconque des revendications précédentes, dans lequel le cation C⁺ du liquide ionique est choisi parmi les cations organiques, tels que les cations hydroxonium, oxonium, ammonium, amidinium, phosphonium, uronium, thiouronium, guanidinium, sulfonium, phospholium, phosphorolium, iodonium, carbonium ; et les cations hétérocycliques tels que les cations pyridinium, quinolinium, isoquinolinium, imidazolium, pyrazolium, imidazolinium, triazolium, pyridazinium, pyrimidinium, pyrrolidinium, thiazolium, oxazolium, pyrazinium, piperazinium, pipéridinium, pyrrolium, pyrizinium, indolium, quinoxalinium, thiomorpholinium, morpholinium, et indolinium ; et les formes tautomères de ceux-ci.

7. Électrolyte selon la revendication 6 dans lequel le cation C⁺ du liquide ionique est choisi parmi les imidazoliums non substitués ou substitués tels que les di-, tri-, tétra- et penta-alkyl imidazoliums, les ammoniums quaternaires, les pipéridiniums non substitués ou substitués tels que les dialkylpiperidiniums, les pyrrolidiniums non substitués ou substitués tels que les dialkylpyrrolidiniums, les pyrazoliums non substitués ou substitués tels que les dialkylpyrazoliums, les pyridiniums non substitués ou substitués tels que les alkylpyridiniums, les phosphoniums tels que les tétraalkylphosphoniums, les sulfoniums tels que les trialkylsulfoniums ; et les formes tautomères de ceux-ci.

8. Électrolyte selon la revendication 7, dans lequel le cation C⁺ du liquide ionique est choisi parmi les pipéridiniums tels que les dialkylpipéridiniums ; les ammoniums quaternaires tels que les ammoniums quaternaires portant quatre groupes alkyles ; les imidazoliums tels que les imidazoliums di-, tri-, tétra-, et penta substitués comme les di-, tri-, tétra- et penta-alkylimidazoliums ; et les formes tautomères de ceux-ci.

9. Électrolyte selon l'une quelconque des revendications précédentes dans lequel l'anion A⁻ du liquide ionique est choisi parmi les halogénures tels que Cl-, BF₄⁻, B(CN)₄⁻, CH₃BF₃⁻, CH₂CHBF₃⁻, CF₃BF₃⁻, m-CₙF₂ₙ₊₁BF₃⁻ où n est un entier tel que 1≤n≤10, PF₆⁻, CF₃CO₂⁻, CF₃SO₃⁻, N(SO₂CF₃)₂⁻, N(COCF₃) (SOCF₃)⁻, N(CN)₂⁻, C(CN)₃⁻, SCN⁻, SeCN⁻, CuCl₂⁻, et AlCl₄⁻ ; de préférence l'anion A⁻ du liquide ionique est choisi parmi BF₄⁻ et TFSI-(N(SO₂CF₃)₂⁻).

10. Électrolyte selon l'une quelconque des revendications précédentes dans lequel le liquide ionique comprend un cation C⁺ choisi parmi les pipéridiniums, les ammoniums quaternaires et les imidazoliums, associé à un anion A⁻ choisi parmi BF₄⁻ et TFSI-(N(SO₂CF₃)₂⁻) ; de préférence le liquide ionique 41 est le BMIBF₄ ou 1-butyl-3-méthylimidazolium tétrafluoroborate.

11. Électrolyte selon l'une quelconque des revendications précédentes dans lequel le sel conducteur est choisi parmi les sels de lithium tels que le LiPF₆ : hexafluorophosphate de lithium, le LiBF₄ : tétrafluoroborate de lithium, le LiAsF₆ : hexafluoroarsenate de lithium, le LiClO₄ : perchlorate de lithium, le LiBOB : bis oxalatoborate de lithium, le LiFSI : bis (fluorosulfonyl) imidure de lithium, les sels de formule générale Li [N (SO₂CₙF₂ₙ₊₁) (SO₂CₘF₂ₘ₊₁)]) où n et m identiques ou différents sont des entiers naturels compris entre 1 et 10, tels que le LiTFSI : bis (trifluorométhylsulfonyl) imidure de lithium ou LiN(CF₃SO₂)₂, ou le LiBeti : bis (perfluoroéthylsulfonyl) imidure de lithium, le LiODBF, le LiB(C₆H₅), le LiCF₃SO₃, le LiC(CF₃SO₂)₃ (LiTFSM), et leurs mélanges ; de préférence le sel conducteur est choisi parmi LiTFSI, LiPF₆, LiFSI, LiBF₄, et leurs mélanges.

12. Électrolyte selon l'une quelconque des revendications précédentes qui comprend de 0,001 à 0,5 moles de surfactant anionique par mole de solvant liquide ionique ; et de 0,1 à 10 mol/L de sel conducteur.

13. Électrolyte selon l'une quelconque des revendications précédentes qui comprend en outre au moins un solvant organique.

14. Électrolyte selon l'une quelconque des revendications 1 à 12 constitué par le ou les électrolyte(s) ionique(s), le ou les sel(s) conducteur(s), le ou les surfactant(s) anionique(s), et le ou les autres surfactant(s) éventuel(s).

15. Électrolyte liquide selon l'une quelconque des revendications précédentes qui comprend 1,6 mol/l de LiPF₆ dans un mélange équimolaire de solvant liquide ionique BMIBF₄ et de SDS.

16. Système électrochimique comprenant un électrolyte selon l'une quelconque des revendications 1 à 15.

17. Accumulateur électrochimique rechargeable, en particulier accumulateur au lithium, comprenant un électrolyte selon l'une quelconque des revendications 1 à 15, une électrode positive et une électrode négative.

18. Accumulateur selon la revendication 17 qui est une pile bouton.

## Claims

1. A ionic liquid electrolyte comprising at least one ionic liquid of formula C⁺A⁻ wherein C⁺ represents a cation and A⁻ represents an anion, and at least one conducting salt, **characterized in that** it further comprises at least one anionic surfactant.

2. The electrolyte according to claim 1 wherein the anionic surfactant is selected from alkyl and alkylaryl sulfates; soaps such as sodium salts of fatty acids; alkylbenzene sulfonates (ABS); alcohol sulfates; alcohol alkyl sulfates; phosphates; cellulose gums such as sodium carboxymethylcellulose; and mixtures thereof.

3. The electrolyte according to claim 2 wherein the anionic surfactant is selected from alkyl sulfates like sodium dodecylsulfate (SDS), sodium carboxymethylcellulose, and sodium stearate.

4. The electrolyte according to any one of claims 1 to 3 which further comprises at least one other surfactant selected from cationic surfactants; non-ionic surfactants such as (poly)ethoxylated and/or (poly) propoxylated alcohols and (especially C₈-C₉) alkyl phenols, polyol esters, saccharose esters, fatty alkanolamides, ethylene oxide/propylene oxide copolymers, and mixtures thereof; and zwitterionic surfactants.

5. The electrolyte according to claim 4 wherein the non-ionic surfactant is selected from TRITON^{®} X such as Triton^{®} X-100, Tergitol^{®} Ls and Tergitol^{®} NPs .

6. The electrolyte according to any one of the preceding claims, wherein the cation C⁺ of the ionic liquid is selected from organic cations, such as hydroxonium, oxonium, ammonium, amidinium, phosphonium, uronium, thiouronium, guanidinium, sulfonium, phospholium, phosphorolium, iodonium, carbonium; and heterocyclic cations such as pyridinium, quinolinium, isoquinolinium, imidazolium, pyrazolium, imidazolinium, triazolium, pyridazinium, pyrimidinium, pyrrolidinium, thiazolium, oxazolium, pyrazinium, piperazinium, piperidinium, pyrrolium, pyrizinium, indolium, quinoxalinium, thiomorpholinium, morpholinium, and indolinium cations; and the tautomeric forms thereof.

7. The electrolyte according to claim 6 wherein the cation C⁺ of the ionic liquid is selected from unsubstituted or substituted imidazoliums such as di-, tri-, tetra- and penta-alkyl imidazoliums, quaternary ammoniums, unsubstituted or substituted piperidiniums such as dialkylpiperidiniums, unsubstituted or substituted pyrrolidiniums such as dialkylpyrrolidiniums, unsubstituted or substituted pyrazoliums such as dialkylpyrazoliums, unsubstituted or substituted pyridiniums such as alkylpyridiniums, phosphoniums such as tetraalkylphosphoniums, sulfoniums such as trialkylsulfoniums; and the tautomeric forms thereof.

8. The electrolyte according to claim 7, wherein the cation C⁺ of the ionic liquid is selected from piperidiniums such as dialkylpiperidiniums; quaternary ammoniums such as quaternary ammoniums bearing four alkyl groups; imidazoliums such as di-, tri-, tetra-, and penta-substituted imidazoliums such as di-, tri-, tetra- and penta-alkylimidazoliums; and the tautomeric forms thereof.

9. The electrolyte according to any one of the preceding claims wherein the anion A⁻ of the ionic liquid is selected from halides such as Cl⁻, BF₄⁻, B(CN)₄⁻_{,} CH₃BF₃⁻, CH₂CHBF₃⁻, CF₃BF₃⁻, m-CₙF₂ₙ₊₁BF₃⁻ wherein n is an integer such that 1≤n≤10, PF₆⁻, CF₃CO₂⁻, CF₃SO₃⁻, N(SO₂CF₃)₂⁻, N(COCF₃) (SOCF₃)⁻, N(CN)₂⁻, C(CN)₃⁻ , SCN⁻, SeCN⁻, CuCl₂⁻, and AlCl₄⁻; preferably the anion A⁻ of the ionic liquid is selected from BF₄⁻ and TFSI-(N(SO₂CF₃)₂⁻) .

10. The electrolyte according to any one of the preceding claims wherein the ionic liquid comprises a cation C⁺ selected from piperidiniums, quaternary ammoniums and imidazoliums, associated with an anion A⁻ selected from BF₄⁻ and TFSI-(N(SO₂CF₃)₂⁻) ; preferably the ionic liquid is BMIBF₄ or 1-butyl-3-methylimidazolium tetrafluoroborate.

11. The electrolyte according to any one of the preceding claims wherein the conducting salt is selected from lithium salts such as LiPF₆: lithium hexafluorophosphate, LiBF₄: lithium tetrafluoroborate, LiAsF_{6:} lithium hexafluoroarsenate, LiClO₄: lithium perchlorate, LiBOB: lithium bis oxalatoborate, LiFSI: lithium bis(fluorosulfonyl) imidide, salts of general formula Li[N(SO₂CₙF₂ₙ₊₁) (SO₂CₘF₂ₘ₊₁)]) wherein n and m either identical or different are natural integers comprised between 1 and 10, such as LiTFSI: lithium bis(trifluoromethylsulfonyl)imidide or LiN(CF₃SO₂)₂, or LiBeti: lithium bis(perfluoroethylsulfonyl) imidide, LiODBF, LiB(C₆H₅), LiCF₃SO₃, LiC(CF₃SO₂)₃ (LiTFSM), and mixtures thereof; preferably the conducting salt is selected from LiTFSI, LiPF₆, LiFSI, LiBF₄, and mixtures thereof.

12. The electrolyte according to any one of the preceding claims which comprises from 0.001 to 0.5 moles of anionic surfactant per mole of ionic liquid solvent; and from 0.1 to 10 mol/L of conducting salt.

13. Electrolyte according to any one of the preceding claims which further comprises at least one organic solvent.

14. The electrolyte according to any one of claims 1 to 12 composed of (consisting in) the ionic electrolyte(s), the conducting salt(s), the anionic surfactant(s), and the other optional surfactant(s).

15. The liquid electrolyte according to any one of the preceding claims which comprises 1.6 mol/l of LiPF₆ in an equimolar mixture of ionic liquid solvent BMIBF₄ and SDS.

16. An electrochemical system comprising an electrolyte according to any one of claims 1 to 15.

17. A rechargeable electrochemical accumulator (or secondary electrochemical battery), in particular a lithium accumulator (or battery) comprising an electrolyte according to any one of claims 1 to 15, a positive electrode and a negative electrode.

18. The accumulator (or battery) according to claim 17 which is a button battery cell.

## Patentansprüche

1. Flüssiger ionischer Elektrolyt umfassend wenigstens eine ionische Flüssigkeit der Formel C⁺A⁻, worin C⁺ ein Kation bedeutet und A⁻ ein Anion bedeutet, und wenigstens ein Leitfähigkeitsalz, **dadurch gekennzeichnet, dass** er außerdem wenigstens ein anionisches Tensid enthält.

2. Elektrolyt gemäß Anspruch 1, bei dem das anionische Tensid aus Alkyl-und Alkylarylsulfaten; Seifen wie etwa Fettsäurenatriumsalzen; Alkylbenzolsulfonaten (ABS); Alkoholsulfaten; Alkoholalkylsulfaten; Phosphaten; Cellulosegummis wie etwa Natriumcarboxymethylcellulose; und ihren Gemischen ausgewählt ist.

3. Elektrolyt gemäß Anspruch 2, bei dem das anionische Tensid aus Alkylsulfaten wie Natriumdodecylsulfat (SDS), Natriumcarboxymethylcellulose und Natriumstearat ausgewählt ist.

4. Elektrolyt gemäß einem der Ansprüche 1 bis 3, der außerdem wenigsten ein anderes, aus kationischen Tensiden; nichtionischen Tensiden wie etwa (poly)ethoxylierten und/oder (poly)propoxylierten Alkoholen und (insbesondere C₈-C₉) Alkylphenolen, Polyolestern, Saccharoseestern, Fettalkanolamiden, Ethylenoxid/Propylenoxid-Copolymeren und ihren Gemischen; und zwitterionischen Tensiden ausgewähltes Tensid umfasst.

5. Elektrolyt gemäß Anspruch 4, bei dem das nichtionische Tensid aus TRITON^{®} X wie etwa Triton^{®} X-100, Tergitol^{®} L und Tergitol^{®} NP ausgewählt ist.

6. Elektrolyt gemäß einem der vorangehenden Ansprüche, bei dem das Kation C⁺ der ionischen Flüssigkeit aus organischen Kationen wie etwa Hydroxonium-, Oxonium-, Ammonium-, Amidinium-, Phosphonium-, Uronium-, Thiuronium-, Guanidinium-, Sulfonium-, Phospholium-, Phosphorolium-, Iodonium-, Carboniumkationen und heterocyclischen Kationen wie etwa Pyridinium-, Chinolinium-, Isochinolinium-, Imidazolium-, Pyrazolium-, Imidazolinium-, Triazolium-, Pyridazinium-, Pyrimidinium-, Pyrrolidinium-, Thiazolium-, Oxazolium-, Pyrazinium-, Piperazinium-, Piperidinium-, Pyrrolium-, Pyrizinium-, Indolium-, Chinoxalinium-, Thiomorpholinium-, Morpholinium- und Indoliniumkationen und deren tautomeren Formen ausgewählt ist.

7. Elektrolyt gemäß Anspruch 6, bei dem das Kation C⁺ der ionischen Flüssigkeit aus unsubstituierten oder substituierten Imidazolium- wie etwa Di-, Tri-, Tetra- und Pentaalkylimidazolium-, quaternären Ammonium-, unsubstituierten oder substituierten Piperidinium- wie etwa Dialkylpiperidinium-, unsubstituierten oder substituierten Pyrrolidinium- wie Dialkylpyrrolidinium-, unsubstituierten oder substituierten Pyrazolium- wie etwa Dialkylpyrazolium-, unsubstituierten oder substituierten Pyridinium- wie etwa Alkylpyridinium-, Phosphonium- wie etwa Tetraalkylphosphonium-, Sulfonium- wie etwa Trialkylsulfoniumkationen und deren tautomeren Formen ausgewählt ist.

8. Elektrolyt gemäß Anspruch 7, bei dem das Kation C⁺ der ionischen Flüssigkeit aus Piperidinium- wie etwa Dialkylpiperidinium-; quaternären Ammoniumwie etwa vier Alkylgruppen aufweisenden quaternären Ammonium-; Imidazolium- wie etwa di-, tri-, tetra- und pentasubstituierten Imidazolium- wie Di-, Tri-, Tetra- und Pentaalkylimidazoliumkationen und deren tautomeren Formen ausgewählt ist.

9. Elektrolyt gemäß einem der vorangehenden Ansprüche, bei dem das Anion A⁻ der ionischen Flüssigkeit aus Halogeniden wie etwa Cl⁻, BF₄⁻, B(CN)₄⁻, CH₃BF₃⁻, CH₂CHBF₃⁻, CF₃BF₃⁻, m-CₙF₂ₙ₊₁BF₃⁻, worin n eine ganze Zahl wie etwa 1 ≤ n ≤ 10 ist, PF₆⁻, CF₃CO₂⁻, CF₃SO₃⁻, N(SO₂CF₃)₂⁻, N(COCF₃)(SOCF₃)⁻, N(CN)₂⁻, C(CN)₃⁻, SCN⁻, SeCN⁻, CuCl₂⁻ und AlCl₄⁻ ausgewählt ist und das Anion A⁻ der ionischen Flüssigkeit vorzugweise aus BF₄⁻ und TFSI-(N(SO₂CF₃)₂⁻) ausgewählt ist.

10. Elektrolyt gemäß einem der vorangehenden Ansprüche, bei dem die ionische Flüssigkeit ein Kation C⁺ umfasst, das aus Piperidium-, quaternären Ammonium- und Imidazoliumkation ausgewählt ist und mit einem Anion A⁻ verbunden ist, das aus BF₄⁻ und TFSI-(N(SO₂CF₃)₂⁻) ausgewählt ist und die ionische Flüssigkeit vorzugsweise BMIBF₄ oder 1-Butyl-3-methylimidazoliumtetrafluorborat ist.

11. Elektrolyt gemäß einem der vorangehenden Ansprüche, bei dem das Leitfähigkeitssalz aus Lithiumsalzen wie etwa LiPF₆: Lithiumhexafluorphosphat, LiBF₄: Lithumtetrafluorborat, LiAsF₆: Lithiumhexafluorarsenat, LiClO₄: Lithiumperchlorat, LiBOB: Lithiumbisoxalatoborat, LiFSI: Lithiumbis(fluorsulfonyl)imid, Salzen der allgemeinen Formel Li[N(SO₂CₙF₂ₙ₊₁)(SO₂CₘF₂ₘ₊₁)], worin n und m gleich oder verschieden und ganze Zahlen zwischen 1 und 10 sind, wie etwa LiTFSI: Lithiumbis(trifluormethylsulfonyl)imid oder LiN(CF₃SO₂)₂ oder LiBeti: Lithiumbis(perfluorethylsulfonyl)imid, LiODBF, LiB(C₆H₅), LiCF₃SO₃, LiC(CF₃SO₃)₃ (LiTFSM) und ihren Gemischen ausgewählt ist und das Leitfähigkeitssalz vorzugsweise aus LiTFSI, LiPF₆, LiFSI, LiBF₄ und ihren Gemischen ausgewählt ist.

12. Elektrolyt gemäß einem der vorangehenden Ansprüche, der 0,001 bis 0,5 Mol anionisches Tensid je Mol flüssiges ionisches Lösungsmittel und 0,1 bis 10 Mol/l Leitfähigkeitssalz umfasst.

13. Elektrolyt gemäß einem der vorangehenden Ansprüche, der außerdem wenigstens ein organisches Lösungsmittel umfasst.

14. Elektrolyt gemäß einem der Ansprüche 1 bis 12, der sich aus dem (den) ionischen Elektrolyten, dem oder den Leitfähigkeitssalz(en), dem oder den anionischen Tensid(en) und dem oder den anderen wahlfreien Tensid(en) zusammensetzt.

15. Elektrolyt gemäß einem der vorangehenden Ansprüche, der 1,6 Mol/l LiPF₆ in einem äquimolaren Gemisch des flüssigen ionischen Lösungsmittels BMIBF₄ und SDS umfasst.

16. Elektrochemisches System umfassend einen Elektrolyten gemäß einem der Ansprüche 1 bis 15.

17. Wiederaufladbarer elektrochemischer Akkumulator, insbesondere Lithiumakkumulator, umfassend einen Elektrolyten gemäß einem der Ansprüche 1 bis 15, eine positive Elektrode und eine negative Elektrode.

18. Akkumulator gemäß Anspruch 17, der eine Knopfzelle ist.
